# EUROPÄISCHE PATENTSCHRIFT

(11) **EP 3 314 954 B1**
(45) Veröffentlichungstag und Bekanntmachung des Hinweises auf die Patenterteilung: **23.09.2020**
(21) Anmeldenummer: 16725404.4
(22) Anmeldetag: 12.05.2016
(51) Int. Cl.: H04W 52/02

(54) **VERFAHREN ZUM BETREIBEN EINER HANDWERKZEUGMASCHINE**
METHOD FOR OPERATING A HAND TOOL MACHINE
PROCÉDÉ POUR FAIRE FONCTIONNER UN APPAREIL D'OUTILLAGE

(30) Priorität: 24.06.2015 DE 102015211673
(43) Veröffentlichungstag der Anmeldung: 02.05.2018
(73) Patentinhaber: Robert Bosch GmbH, 70442 Stuttgart (DE)
(72) Erfinder: FREIENSTEIN, Heiko, 71263 Weil der Stadt (DE); VISEL, Benjamin, 75378 Bad Liebenzell-Moettlingen (DE); MOENNICH, Joerg, 70437 Stuttgart (DE); HESZLER, Anna, 71701 Schwieberdingen (DE); KOENIG, Anja, 72770 Reutlingen (DE); ONDRATSCHEK, Jan, 73630 Remshalden (DE); STEURER, Christoph, 73660 Urbach (DE)
(86) Internationale Anmeldenummer: PCT/EP2016/060640
(87) Internationale Veröffentlichungsnummer: WO 2016/206858

(56) Entgegenhaltungen:
- AU-A1- 2013 203 922
- US-A1- 2007 058 580
- US-A1- 2012 154 512
- US-A1- 2014 070 924
- US-A1- 2014 184 397

## Beschreibung

Die Erfindung betrifft ein Verfahren zum Betreiben einer Handwerkzeugmaschine die ein Kommunikationsmodul zur drahtlosen Kommunikation aufweist, wobei das Kommunikationsmodul mit elektrischer Energie aus einem Energiespeicher des Mobilgeräts versorgt wird.

Weiterhin betrifft die Erfindung eine entsprechende Handwerkzeugmaschine.

### Stand der Technik

Verfahren, Mobilgeräte und Datenmanagementsysteme der eingangs genannten Art sind grundsätzlich bekannt. Kommunikationsmodule zur drahtlosen Kommunikation, also zum Senden und/oder Empfangen von Daten, beispielsweise Informationsdaten, Steuerdaten, Berechtigungsdaten, Identifikationsdaten oder dergleichen, sind grundsätzlich bekannt. Der Betrieb derartiger Kommunikationsmodule erfordert elektrische Energie, die üblicherweise von austauschbaren oder wiederaufladbaren Energiespeichern zur Verfügung gestellt wird. Häufig sind die Energiespeicher als Primärzellen, manchmal jedoch auch als Sekundärzellen ausgebildet. Insbesondere ist es bekannt, derartige Energiespeicher als Pufferbatterien auszubilden. Die Laufzeit dieser Energiespeicher ist endlich und insbesondere von dem Betrieb des Kommunikationsmoduls abhängig. Nach Ablauf der Laufzeit muss der Energiespeicher aufgeladen oder ausgetauscht werden. Bei einem System, bei welchem eine Vielzahl entsprechender Kommunikationsmodule verwendet werden, beispielsweise bei einem Datenmanagementsystem, das mehrere mobile Handwerkzeugmaschinen und/oder Nutzeridentifikationseinheiten umfasst, stellt die Wartung und/oder Wechsel der Energiespeicher einen nachteiligen zeitlichen und kostentechnischen Aufwand dar.

Die Offenlegungschriften US 2007/058580 A1, US 2012/154512 A1, AU 2013 203 922 A1, US 2014/184397 A1 und US 2014/184397 A1 offenbaren solche Verfahren und Geräte.

### Offenbarung der Erfindung

Das erfindungsgemäße Verfahren mit den Merkmalen des Anspruchs 1 hat den Vorteil, dass die Häufigkeit eines notwendigen Austauschs des Energiespeichers oder des Aufladens des Energiespeichers verringert und damit die Akzeptanz eines derartigen Mobilgeräts oder Datenmanagementsystems erhöht wird. Das erfindungsgemäße Verfahren mit den Merkmalen des Anspruchs 1 sieht dazu vor, dass das Kommunikationsmodul zumindest zum Senden von Daten nur zeitweise mit Energie versorgt wird. Der Betrieb des Kommunikationsmoduls wird somit insbesondere unabhängig von einem Betriebszustand des Mobilgeräts begrenzt, sodass eine dauerhafte Bestromung des Kommunikationsmoduls vermieden wird. Dadurch wird die Belastung des Energiespeichers reduziert und es ergeben sich die oben genannten Vorteile. Insbesondere ist vorgesehen, dass die Energieversorgung des Kommunikationsmoduls nur bezüglich des Sendens von Daten bevorzugt nur zeitweise erfolgt, während das Kommunikationsmodul zum Empfangen von Daten dauerhaft mit Energie versorgt wird. Dadurch wird erreicht, dass das Kommunikationsmodul jederzeit Daten empfangen und somit drahtlos angesprochen werden kann. In diesem Bereitschaftsbetrieb wird nur eine geringe Menge von Energie benötigt. Alternativ ist bevorzugt vorgesehen, dass das Kommunikationsmodul insgesamt, als sowohl zum Senden als auch zum Empfangen von Daten, nur zeitweise mit Energie versorgt wird.

Vorzugsweise wird das Kommunikationsmodul aus einem Energiespeicher mit Energie versorgt, der unabhängig von einem Energiespeicher des Mobilgeräts ist, der für den Betrieb des Mobilgeräts, beispielsweise zur elektrischen Versorgung einer elektrischen Antriebsmaschine des Mobilgeräts, vorgesehen ist. Es ist also vorgesehen, dass das Kommunikationsmodul aus einem eigenen Energiespeicher unabhängig von dem übrigen Mobilgerät mit Energie entsprechend des erfindungsgemäßen Verfahrens versorgt wird.

Nach einer vorteilhaften Weiterbildung der Erfindung ist bevorzugt vorgesehen, dass das Kommunikationsmodul in Abhängigkeit von Benutzervorgaben mit Energie versorgt wird. So wird dem Benutzer beispielsweise die Möglichkeit gegebenen, die Betriebsdauer des Kommunikationsmoduls einzustellen und/oder Zeitpunkte, zu welchen das Kommunikationsmodul mit Energie versorgt und von der Energiequelle getrennt werden soll. Hierzu wird dem Benutzer insbesondere eine Eingabemöglichkeit mittels einer Eingabevorrichtung an dem Mobilgerät zur Verfügung gestellt, durch deren Betätigung der Benutzer die Zeitvorgaben vornehmen kann.

Besonderes bevorzugt ist vorgesehen, dass der Benutzer das Kommunikationsmodul, insbesondere unabhängig vom Betrieb des Mobilgeräts, deaktivieren kann, wobei das Kommunikationsmodul nach Ablauf einer vorbestimmten Zeitspanne nach der Deaktivierung wieder aktiviert und mit Energie versorgt wird. In diesem Fall kann der Benutzer das Kommunikationsmodul des Mobilgeräts in einen Schlafmodus oder Ruhemodus versetzen, in welchem das Kommunikationsmodul nicht mehr mit Energie versorgt wird. Erst nach Ablauf der vorbestimmten Zeitspanne wird das Kommunikationsmodul wieder automatisch mit elektrischer Energie aus dem Energiespeicher versorgt und dadurch aktiviert.

Weiterhin ist bevorzugt vorgesehen, dass das Kommunikationsmodul in Abhängigkeit von einem vorgebbaren Senderintervall mit Energie versorgt wird. Dem Benutzer wird dabei insbesondere die Möglichkeit gegeben, Senderintervalle vorzubestimmen, also den Zeitabstand zwischen Zeitpunkten, zu welchen das Kommunikationsmodul Daten senden darf beziehungsweise sendet. Dadurch kann der Benutzer den Energieverbrauch des Kommunikationsmoduls auf einfache und nachvollziehbare Art und Weise beschränken.

Weiterhin ist bevorzugt vorgesehen, dass das Kommunikationsmodul erst dann mit Energie versorgt wird, wenn eine Datenmenge zu senden ist, die einen vorgebbaren Grenzwert überschreitet. Damit wird der Betrieb des Kommunikationsmoduls auch in Abhängigkeit der zu übermittelnden Datenmengen gesteuert. Erst dann, wenn die Datenmenge ausreichend groß ist, sodass sich eine Aktivierung des Kommunikationsmoduls lohnt, wird dieses aktiviert. Dadurch kann vermieden werden, dass das Kommunikationsmodul dauerhaft kleine Datenmengen übermittelt und den Energiespeicher entsprechend lange belastet.

Ferner ist bevorzugt vorgesehen, dass das Kommunikationsmodul zum Senden von Daten nur dann mit Energie versorgt wird, wenn zuvor eine Anfrage zum Senden der Daten von dem Kommunikationsmodul empfangen wurde. Dies ist insbesondere dann von Bedeutung, wenn, wie zuvor bereits erwähnt, das Kommunikationsmodul bevorzugt bezüglich des Sendens von Daten nur zeitweise mit Energie versorgt wird, zum Empfangen von Daten jedoch dauerhaft bestromt wird. Dazu wird vorzugsweise eine Empfangseinheit des Kommunikationsmoduls dauerhaft bestromt, während eine Sendereinheit des Kommunikationsmoduls wie zuvor beschrieben nur zeitweise aktiviert beziehungsweise bestromt wird.

Das erfindungsgemäße Handwerkzeuggerät mit den Merkmalen des Anspruchs 8 zeichnet sich dadurch aus, dass das Steuergerät zum Betreiben des Kommunikationsmoduls speziell dazu ausgebildet ist, das erfindungsgemäße Verfahren durchzuführen. Es ergeben sich hierdurch die bereits genannten Vorteile. Bei dem Steuergerät kann es sich um ein für das Kommunikationsmodul separat vorgesehenes Steuergerät oder um ein Steuergerät des jeweiligen Mobilgeräts handeln.

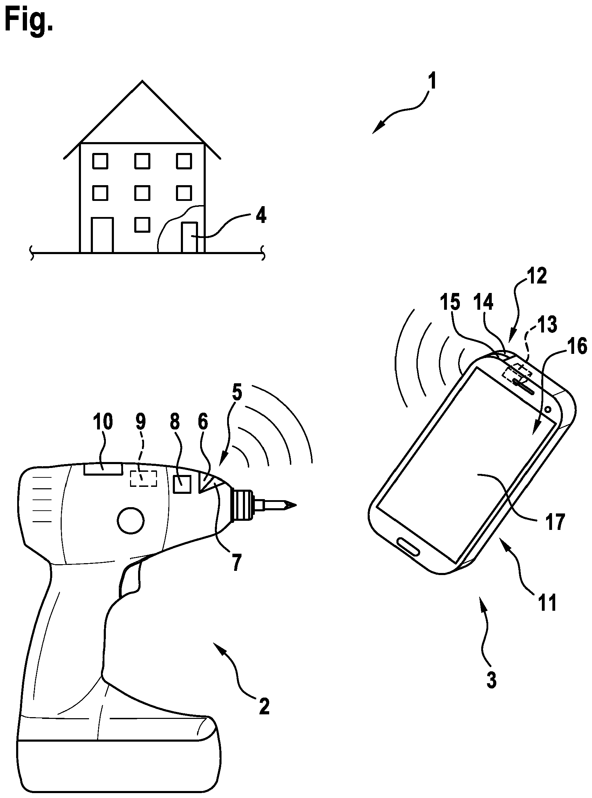

Im Folgenden soll die Erfindung anhand der Zeichnung näher erläutert werden. Dazu zeigt die einzige
- Figur: ein Datenmanagementsystem in einer vereinfachten Darstellung.

Die Figur zeigt in einer vereinfachten Darstellung eine Datenmanagementsystem 1, das ein erstes Mobilgerät 2, ein zweites Mobilgerät 3 und eine Zentraleinheit 4 aufweist. Die Zentraleinheit 4 ist insbesondere ein Datenbankserver, der drahtlos kontaktierbar ist, beispielsweise über ein drahtloses Telefonnetz, per Wireless LAN oder anderen Funkstandards. In dem Datenbankserver 4 werden beispielsweise Mobilgeräte registriert, die gekauft wurden. Dabei können außerdem dem jeweiligen Mobilgerät zugehörige Daten, die das Mobilgerät selbst oder auch den Benutzer beziehungsweise Käufer des Mobilgeräts betreffen, mitgespeichert werden.

Das Mobilgerät 2 ist gemäß dem vorliegenden Ausführungsbeispiel als elektrisch betriebene Handwerkzeugmaschine ausgebildet, die einen Antriebsmotor ausweist, der von einem austauschbaren Akkupack 4 mit Energie versorgt wird. Das Mobilgerät 2 weist weiterhin ein Kommunikationsmodul 5 auf, das dazu ausgebildet ist, drahtlos Daten zu senden oder zu empfangen. Insbesondere weist das Kommunikationsmodul 5 eine Sendeeinrichtung 6 und eine Empfangseinrichtung 7 auf. Weiterhin ist vorgesehen, dass das Kommunikationsmodul 5 eine eigene Energieversorgung in Form eines Energiespeichers 8 aufweist, der beispielsweise als Pufferbatterie ausgebildet ist. Durch ein dem Kommunikationsmodul 5 zugeordnetes Steuergerät 9 wird das Kommunikationsmodul 5 betrieben, wobei das Steuergerät 9 außerdem mit einer Eingabeeinrichtung 10 verbunden ist, mittels welcher ein Benutzer des Mobilgeräts 2 das Mobilgerät 2 und/oder das Kommunikationsmodul 5 ansteuern kann.

Das Mobilgerät 3 ist als Mobilfunktelefon ausgebildet und dient vorliegend als Nutzeridentifikationseinheit 11. Das zweite Mobilgerät 3 weist ebenfalls ein Kommunikationsmodul 12 mit einem eigenen Energiespeicher 13 auf, wobei auch das Kommunikationsmodul 12 eine Sendereinheit 14 und eine Empfangseinheit 15 umfasst. Weiterhin ist auch dem Kommunikationsmodul 5 ein Steuergerät 16 zugeordnet, das vorliegend von dem Mobiltelefon selbst zur Verfügung gestellt wird, beispielsweise in Form des Mikroprozessors des Mobilfunktelefons. Das Mobilgerät 3 weist außerdem einen berührungsempfindlichen Bildschirm 17 auf, mittels dessen der Benutzer manuell Daten in das Mobilgerät 3 eingeben und das Mobilgerät 3 bedienen kann.

Die beiden Kommunikationsmodule 5 und 12 sind dazu ausgebildet miteinander oder mit der Zentraleinheit 4 drahtlos zu kommunizieren und insbesondere Daten zu versenden und zu empfangen.

Das Datenmanagementsystem 1 dient beispielsweise dazu, dass ein Benutzer des Mobilgeräts 2 sich mit Hilfe des Mobilgeräts 3 registrieren und gegebenenfalls werkzeugspezifische Daten herunterladen und zur Einstellung der Handwerkzeugmaschine verwenden kann. Auch kann ein Benutzer das Mobilgerät 3 dazu benutzen, den Überblick über gegebenenfalls mehrere vorhandene Handwerkzeugmaschinen gemäß dem Mobilgerät 2 zu behalten, indem er diese registriert und mit Daten in der Zentraleinheit 4 abgleicht. Um den Betrieb des Datenmanagementsystems 1 möglichst lange aufrecht erhalten zu können, ohne die den Kommunikationsmodulen 5, 12 zugeordneten Energiespeicher 8, 13 austauschen oder wiederaufladen zu müssen, werden die Kommunikationsmodule 5, 12 zumindest zum Senden von Daten nur zeitweise mit Energie durch den jeweiligen Energiespeicher 8, 13 versorgt.

Das Steuergerät 9 und/oder das Mobilgerät 3 sind derart ausgebildet, dass der Benutzer ein Funkintervall des jeweiligen Kommunikationsmoduls 5 und/oder 12 verändern kann. Insbesondere ist vorgesehen, dass der Benutzer das Funkintervall, also die Zeitabstände, nach welchen das jeweilige Kommunikationsmodul 5, 12 mit Energie versorgt werden soll, fest vorgeben kann. In den Zeiträumen zwischen den vorgebbaren Zeiträumen beziehungsweise innerhalb des Zeitintervalls wird die Energieversorgung zu dem jeweiligen Kommunikationsmodul unterbrochen beziehungsweise beendet, sodass in dieser Zeit keine elektrische Energie verbraucht wird. Der Benutzer kann das jeweilige Kommunikationsmodul 5, 12 drahtlos, beispielsweise über ein Softwareprogramm, insbesondere im Fall des Mobilgeräts 3, oder mechanisch, beispielsweise durch Betätigung eines Schalters oder Tasters, in einen Ruhezustand schalten, in welchem das jeweilige Kommunikationsmodul 5 und/oder 12 deaktiviert und insoweit nicht mehr mit Energie versorgt wird. Vorzugsweise erwacht das jeweilige Mobilgerät 2, 3 beziehungsweise das jeweilige Kommunikationsmodul 5, 12 nach Ablauf der vorgegebenen Zeitdauer von selbst, indem es wieder bestromt wird. Dies wird durch das jeweilige Steuergerät 9 oder 16 gewährleistet. Weiterhin ist es vorteilhaft, dass das jeweilige Kommunikationsmodul 5, 12 spätestens wieder dann aktiviert wird, wenn das jeweilige Mobilgerät 2 oder 3 in Betrieb genommen wird, beispielsweise durch eine vorzeitige Betätigung eines Hauptschalters des jeweiligen Mobilgeräts 2, 3 oder dergleichen. Der Benutzer kann somit das jeweilige Kommunikationsmodul 5, 12 in einen energiesparenden Zustand schalten, der automatisch wieder aufgehoben wird. Das Aktivieren, insbesondere ein erstmaliges Aktivieren des jeweiligen Kommunikationsmoduls 5, 12 erfolgt bevorzugt durch einen mechanischen Schalter oder Taster oder durch das Entfernen eines elektrisch trennenden/isolierenden Materialstreifen, der beispielsweise zunächst zwischen zwei elektrischen Berührungskontakten liegt, die federbeaufschlagt gegeneinander vorgespannt sind.

Bevorzugt wird bei den genannten Lösungen vorgesehen, dass lediglich die Sendereinheit 6 oder 13 zur Energiesparung deaktiviert wird, die Empfangseinheit jedoch weiter betrieben wird beziehungsweise mit elektrischer Energie versorgt wird, um dann, wenn das Kommunikationsmodul 5 oder 12 per Funk eine Abfrage oder Anforderung empfängt, die Sendereinheit automatisch wieder zu aktivieren. So kann beispielsweise vorgesehen sein, dass nur dann von der Nutzeridentifikationseinheit 11 Daten an die Zentraleinheit 4 übertragen werden, wenn eine entsprechende Anfrage aus der Zentraleinheit 4 für das Kommunikationsmodul 12 des Mobilgeräts 3 empfangen wird. Dies kann beispielsweise dann der Fall sein, wenn von der Zentraleinheit 4 ein aktueller Standort des Mobilgeräts 3 oder des Mobilgeräts 2 abgefragt wird.

Weiterhin ist bevorzugt vorgesehen, dass das jeweilige Kommunikationsmodul 5, 12 beziehungsweise die jeweilige Sendereinheit dann aktiviert wird, wenn eine Menge an Daten an die Datenspeichereinheit der Zentraleinheit 4 übertragen werden soll, die einen vorgebbaren Grenzwert überschreiten. Dies ist beispielsweise dann der Fall, wenn größere Änderungen der Daten auftreten, beispielsweise wenn neue Mobilgeräte 2 mit einem entsprechenden Kommunikationsmodul 5 in das Datensystem 1 eintreten oder aus diesem herausfallen, oder wenn Daten der Nutzeridentifikationseinheit 11 verändert werden, beispielsweise bei Änderungen von Positionierungsdaten des Mobilgeräts 2, zumindest sofern dieses über ein Satelliten gestütztes Navigationsmodul verfügt.

Ferner ist vorteilhafterweise vorgesehen, dass das jeweilige Kommunikationsmodul 5, 12 nur dann aktiviert wird, um die Umgebung nach weiteren Kommunikationsmodulen 5, 12 zu überwachen, wenn eine entsprechende Anfrage aus beispielsweise der Zentraleinheit 4 oder einem der Mobilgeräte 2, 3 empfangen wird, oder wenn Daten, insbesondere wie zuvor beschrieben, geändert werden. Die Sensitivität bezüglich einer Aktivierung des jeweiligen Kommunikationsmodul 5, 12 in Abhängigkeit von der Änderung von Daten lässt sich vom Benutzer vorzugsweise über an dem jeweiligen Mobilgerät 2, 3 einstellen. So kann der Benutzer beispielsweise einen Radius bezogen auf von einem Navigationssystem erfassten Positionsdaten festlegen, innerhalb dessen das Mobilgerät 2, 3 mit anderen Mobilgeräten 2, 3 beziehungsweise mit Kommunikationsmodulen 5, 12 anderer Mobilgeräte 2, 3 kommunizieren soll oder kann.

## Patentansprüche

1. Verfahren zum Betreiben einer Handwerkzeugmaschine (2), die ein Kommunikationsmodul (5) zur drahtlosen Kommunikation aufweist, wobei das Kommunikationsmodul (5) mit elektrischer Energie aus einem Energiespeicher (8) der Handwerkzeugmaschine (2) versorgt wird, **dadurch gekennzeichnet, dass** das Kommunikationsmodul (5) zumindest zum Senden von Daten unabhängig von einem Betriebszustand der Handwerkzeugmaschine (2) nur zeitweise mit Energie versorgt wird.

2. Verfahren nach Anspruch 1, **dadurch gekennzeichnet, dass** das Kommunikationsmodul (5, 12) in Abhängigkeit von Benutzervorgaben mit Energie versorgt wird.

3. Verfahren nach einem der vorhergehenden Ansprüche, **dadurch gekennzeichnet, dass** der Benutzer das Kommunikationsmodul (5) deaktivieren kann, wobei das Kommunikationsmodul (5) nach Ablauf einer vorbestimmten Zeitspanne nach der Deaktivierung aktiviert und mit Energie versorgt wird.

4. Verfahren nach einem der vorhergehenden Ansprüche, **dadurch gekennzeichnet, dass** das Kommunikationsmodul (5) in Abhängigkeit von einem vorgebbaren Sendeintervall mit Energie versorgt wird.

5. Verfahren nach einem der vorhergehenden Ansprüche, **dadurch gekennzeichnet, dass** das Kommunikationsmodul (5) erst dann mit Energie versorgt wird, wenn eine Datenmenge zu übertragen ist, die einen vorgebbaren Grenzwert überschreitet.

6. Verfahren nach einem der vorhergehenden Ansprüche, **dadurch gekennzeichnet, dass** das Kommunikationsmodul (5) zum Senden von Daten nur dann mit Energie versorgt wird, wenn zuvor eine Anfrage zum Senden der Daten von dem Kommunikationsmodul (5) empfangen wurde.

7. Handwerkzeugmaschine (2) mit einem Kommunikationsmodul (5) und mit wenigstens einem Steuergerät (9) zur Durchführung des Verfahrens nach einem der vorhergehenden Ansprüche.

## Claims

1. Method for operating a handheld power tool (2) which has a communication module (5) for wireless communication, wherein the communication module (5) is supplied with electrical energy from an energy store (8) of the handheld power tool (2), **characterized in that** the communication module (5) is only occasionally supplied with energy at least for transmitting data independently of an operating state of the handheld power tool (2).

2. Method according to Claim 1, **characterized in that** the communication module (5, 12) is supplied with energy on the basis of user specifications.

3. Method according to one of the preceding claims, **characterized in that** the user can deactivate the communication module (5), wherein the communication module (5) is activated and supplied with energy after expiry of a predetermined period after deactivation.

4. Method according to one of the preceding claims, **characterized in that** the communication module (5) is supplied with energy on the basis of a predefinable transmission interval.

5. Method according to one of the preceding claims, **characterized in that** the communication module (5) is supplied with energy only when a volume of data which exceeds a predefinable limit value needs to be transmitted.

6. Method according to one of the preceding claims, **characterized in that** the communication module (5) is supplied with energy for transmitting data only when a request to transmit the data was previously received by the communication module (5).

7. Handheld power tool (2) having a communication module (5) and having at least one control device (9) for carrying out the method according to one of the preceding claims.

## Revendications

1. Procédé d'exploitation d'un outil à main motorisé (2) qui présente un module de communication (5) pour la communication sans fil, le module de communication (5) étant alimenté en énergie électrique à partir d'un accumulateur d'énergie (8) de l'outil à main motorisé (2), **caractérisé en ce que** le module de communication (5) n'est alimenté en énergie que temporairement au moins pour envoyer des données indépendamment d'un état de fonctionnement de l'outil à main motorisé (2).

2. Procédé selon la revendication 1, **caractérisé en ce que** le module de communication (5, 12) est alimenté en énergie en fonction des préférences utilisateur.

3. Procédé selon l'une quelconque des revendications précédentes, **caractérisé en ce que** l'utilisateur peut désactiver le module de communication (5), le module de communication (5) étant activé et alimenté en énergie après l'expiration d'une période de temps prédéterminée après la désactivation.

4. Procédé selon l'une quelconque des revendications précédentes, **caractérisé en ce que** le module de communication (5) est alimenté en énergie en fonction d'un intervalle d'émission prédéfinissable.

5. Procédé selon l'une quelconque des revendications précédentes, **caractérisé en ce que** le module de communication (5) n'est alimenté en énergie que lorsqu'une quantité de données est à transmettre qui dépasse une valeur seuil prédéfinissable.

6. Procédé selon l'une quelconque des revendications précédentes, **caractérisé en ce que** le module de communication (5) n'est alimenté en énergie pour envoyer des données que si auparavant une demande d'envoi des données a été reçue par le module de communication (5).

7. Outil à main motorisé (2), comprenant un module de communication (5) et au moins un appareil de commande (9) pour effectuer le procédé selon l'une quelconque des revendications précédentes.
